# FASCICULE DE BREVET EUROPEEN

(11) **EP 2 927 517 B1**
(45) Date de publication et mention de la délivrance du brevet: **20.06.2018**
(21) Numéro de dépôt: 15161801.4
(22) Date de dépôt: 30.03.2015
(51) Int. Cl.: F16B 43/00, F16B 7/04, F16B 7/14, B62J 1/08, B62K 19/36

(54) **Cycle comportant un dispositif de réglage rapide de selle et dispositif de réglage de selle pour un tel cycle**
Fahrrad mit einer schnelllösenden Sattelverstelleinrichtung und schnelllösende Sattelverstelleinrichtung ein solches Fahrrad
Cycle comprising a quick-release saddle adjusting mechanism and quick-release saddle adjusting mechanism for such a cycle

(30) Priorité: 31.03.2014 FR 1452797
(43) Date de publication de la demande: 07.10.2015
(73) Titulaire: JCDecaux SA, 92200 Neuilly-Sur-Seine (FR)
(72) Inventeur: Ardouin, Thieric, 78340 Les Clayes sous Bois (FR)
(74) Mandataire: Cabinet Plasseraud

(56) Documents cités:
- WO-A1-2012/066215
- DE-A1- 4 034 710
- DE-A1-102008 012 573

## Description

### DOMAINE DE L'INVENTION

La présente invention est relative aux cycles comportant des dispositifs de réglage rapide de selle et aux dispositifs de réglage de selle pour de tels cycles.

Plus particulièrement, l'invention concerne un cycle comportant :
- un cadre monté sur roues et comportant un tube de guidage de selle,
- une selle portée par une tige de selle qui est montée coulissante dans le tube de guidage,
- un dispositif de réglage de selle comportant :
   - un collier de serrage ouvert disposé autour du tube de guidage et comportant des première et deuxième extrémités aptes à se rapprocher l'une de l'autre en serrant le tube de guidage sur la tige de selle, au moins la première extrémité ayant une face externe pourvue d'une première surface de came hélicoïdale,
   - un levier monté pivotant sur les première et deuxième extrémités du collier de serrage autour d'un axe de rotation sensiblement perpendiculaire à la tige de selle, le levier ayant une deuxième surface de came hélicoïdale disposée en regard de la première surface de came hélicoïdale, le levier étant actionnable en pivotement par un utilisateur dans des premier et deuxième sens opposés pour sélectivement serrer et desserrer le collier de serrage.

### ARRIERE PLAN DE L'INVENTION

Le document WO2012/066215 décrit un exemple de cycle de ce type, qui présente l'inconvénient que l'actionnement du levier est difficile pour un utilisateur lorsque le collier de serrage est serré sur le tube de guidage.

### OBJETS DE L'INVENTION

La présente invention a notamment pour but de pallier cet inconvénient.

A cet effet, selon l'invention, un cycle du genre en question est caractérisé en ce qu'il comporte en outre une rondelle de glissement en matériau à faible coefficient de friction, interposée entre les première et deuxième surfaces de came hélicoïdales, la rondelle de glissement étant ouverte et présentant une forme hélicoïdale en correspondance avec les formes des première et deuxième surfaces de came hélicoïdales, les première et deuxième surfaces de came hélicoïdales et la rondelle de glissement présentant chacune une forme sensiblement tronconique, formant un angle différent de 90 degrés avec l'axe de rotation.

Grâce à ces dispositions, d'une part la bague de glissement permet de diminuer l'effort demandé à l'utilisateur pour actionner le levier lorsque le collier de serrage est serré, et d'autre part, la forme sensiblement tronconique permet que cette rondelle de glissement soit efficacement maintenue en position et en forme lors du serrage, bien qu'elle soit ouverte (la forme ouverte est due aux surfaces de came hélicoïdales).

Dans différents modes de réalisation du cycle selon l'invention, on peut éventuellement avoir recours en outre à l'une et/ou à l'autre des dispositions suivantes (utilisables éventuellement indépendamment les unes des autres et indépendamment des dispositions précitées) :
- le levier est solidaire d'un tourillon traversant les première et deuxième extrémités du collier de serrage et comportant une tête élargie qui prend appui sur la deuxième extrémité dudit collier de serrage pour serrer le collier de serrage lorsque le levier pivote dans le premier sens ;
- les première et deuxième surfaces de came hélicoïdales s'étendent chacune, dans le premier sens, entre des première et deuxième extrémités séparées l'une de l'autre par un ressaut sensiblement radial, les ressauts des première et deuxième surfaces de came étant adaptés pour buter l'un contre l'autre en limitant le pivotement du levier dans le deuxième sens ;

- les première et deuxième surfaces de came hélicoïdales s'étendent chacune, dans le premier sens, entre des première et deuxième extrémités séparées l'une de l'autre par un ressaut sensiblement radial, la rondelle de glissement s'étendant angulairement entre des première et deuxième extrémités décalées axialement et séparées par une fente radiale, la première extrémité de la rondelle de glissement venant en butée contre le ressaut d'une des surfaces de came lorsque le levier pivote dans le deuxième sens et la première extrémité de la rondelle de glissement étant adaptée pour s'écarter du ressaut de la première surface de came : cette possibilité de mouvement de la rondelle de glissement, facilite encore le glissement et donc la facilité d'actionnement du levier lorsqu'il est serré ;
- ledit angle est compris entre 15 et 45 degrés ;
- la rondelle de glissement est réalisée au moins partiellement en laiton.

Par ailleurs, l'invention a également pour objet un dispositif de réglage pour un cycle tel que défini ci-dessus, comportant :
- un collier de serrage ouvert comportant des première et deuxième extrémités aptes à se rapprocher l'une de l'autre, au moins la première extrémité ayant une face externe pourvue d'une première surface de came hélicoïdale,
- un levier monté pivotant sur les extrémités du collier de serrage autour d'un axe de rotation sensiblement perpendiculaire à un axe central du collier, le levier ayant une deuxième surface de came hélicoïdale disposée en regard de la première surface de came hélicoïdale, le levier étant actionnable en pivotement par un utilisateur dans des premier et deuxième sens opposés pour sélectivement serrer et desserrer le collier de serrage.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'un cycle selon une forme de réalisation de l'invention,
- la figure 2 est une vue de détail en perspective montrant la selle du cycle de la figure 1 et son dispositif de réglage,
- la figure 3 est une vue en coupe verticale sagittale de la selle et du dispositif de réglage de la figure 2,
- les figures 4 et 5 sont des vues éclatées en perspective de la selle et du dispositif de réglage de la figure 2, vus dans deux directions différentes, et
- la figure 6 est une vue en coupe selon la ligne VI-VI de la figure 4.

### DESCRIPTION PLUS DETAILLEE

Sur les différentes figures, les mêmes références désignent des éléments identiques ou similaires.

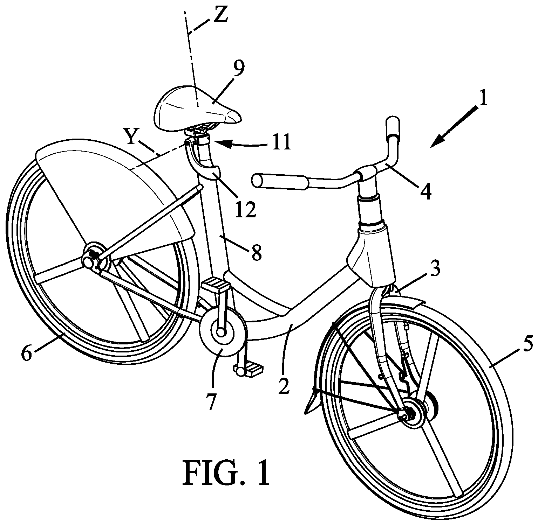

Le cycle 1 montré sur la figure 1 à titre d'exemple, comporte un cadre 2 qui porte à l'avant une fourche pivotante 3 reliée à un guidon 4. La fourche 3 porte une roue avant 5 et la partie arrière du cadre porte une roue arrière 6. Le cadre porte également un pédalier 7 et comporte un tube de guidage 8 de selle, d'axe Z sensiblement vertical.

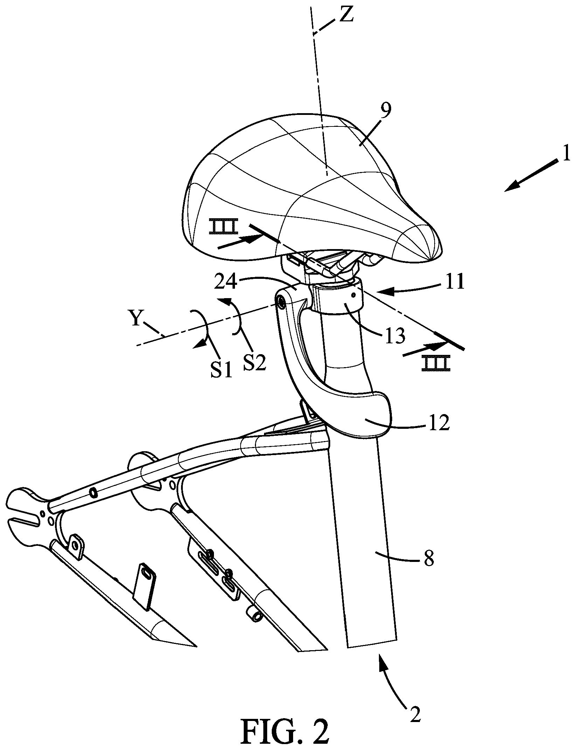

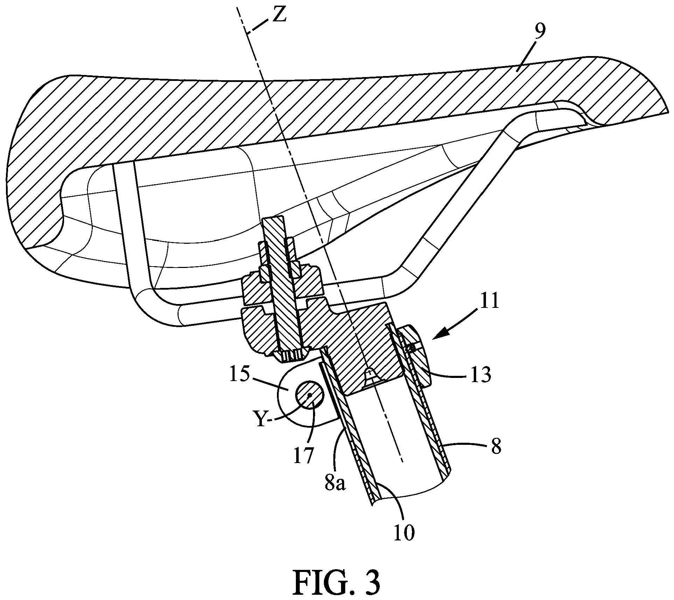

Comme représenté notamment sur les figures 1 à 3, le cycle comporte également une selle 9 portée par une tige de selle 10 qui est montée coulissante selon l'axe Z dans le tube de guidage 8 et est réglable au moyen d'un dispositif 11 de réglage de selle.

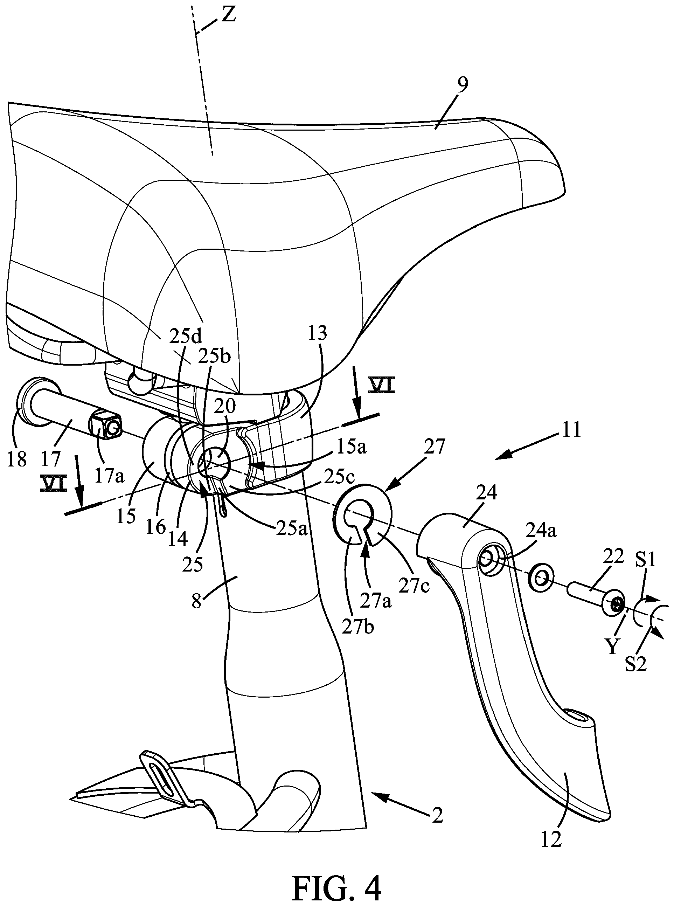

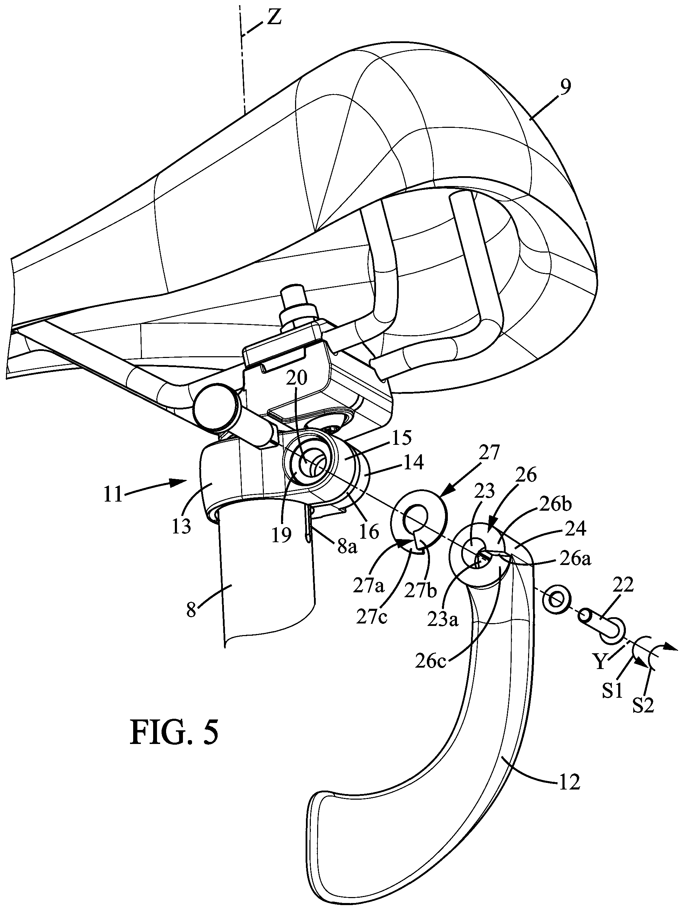

Comme représenté sur les figures 4 à 6, le dispositif 11 de réglage de selle comporte un levier 12 qui commande un collier de serrage 13 ouvert, disposé autour d'une extrémité supérieure du tube de guidage 8. Cette extrémité supérieure du tube de guidage comporte de préférence une fente 8 parallèle à l'axe Z, qui permet au collier de serrage 13 de serrer le tube de guidage 80 sur la tige de selle 10 en immobilisant ainsi la selle 9 en position après réglage.

Le collier de serrage 13 est un collier ouvert, sensiblement en forme de oméga, comportant des première et deuxième extrémités 14, 15 en forme de pattes qui sont normalement séparées l'une de l'autre par une fente 16 ayant par exemple quelques millimètres d'épaisseur.

Le levier 12 est monté pivotant sur les première et deuxième extrémités 14, 15 du collier de serrage autour d'un axe de rotation Y horizontal, sensiblement perpendiculaire à la tige de selle (10). Le levier 12 est actionnable en pivotement par un utilisateur dans des premier et deuxième sens opposés S1, S2 pour sélectivement serrer et desserrer le collier de serrage 13.

Le levier 12 peut être solidaire d'un tourillon 17 traversant les première et deuxième extrémités 14, 15 du collier de serrage et comportant une tête élargie 18 qui prend appui sur la deuxième extrémité 15 dudit collier de serrage pour serrer le collier de serrage 13 lorsque le levier 12 pivote dans le premier sens S1. La tête 18 du tourillon peut éventuellement être logée dans un évidement 19 ménagé sur la face externe de la première extrémité du collier de serrage 13, tandis que le corps du tourillon 17 traverse des trous 20, 21 ménagés respectivement dans les première et deuxième extrémités du collier de serrage et pénètre dans un trou borgne 23 ménagé dans le moyeu 24 du levier 12. Le tourillon 17 peut en outre comporter une extrémité 17a à section non circulaire, par exemple carrée, qui s'emboîte dans une partie 23a de même section du trou 23. Cette extrémité 17a du tourillon peut être fixée dans le moyeu 24 par une vis 22 ou autre, la tête de la vis 22 pouvant être éventuellement reçue dans un logement 24a ménagé dans la face externe du moyeu 24.

Lorsque le levier 12 est actionné dans le premier sens opposés S1, les première et deuxième extrémités 14, 15 se rapprochent l'une de l'autre en serrant le tube de guidage 8 sur la tige de selle 10. Lorsque le levier 12 est actionné dans le deuxième sens S2 les première et deuxième extrémités 14, 15 s'écartent l'une de l'autre en desserrant le tube de guidage 8, ce qui libère la tige de selle 10 et permet son réglage en hauteur de la selle 9.

A cet effet, la face externe de la première extrémité 14 du collier de serrage 13 est pourvue d'une première surface de came hélicoïdale 25 centrée sur l'axe de rotation Y du levier 12, et la partie centrale 24 du levier 12 comporte une deuxième surface de came hélicoïdale 26 disposée en regard de la première surface de came hélicoïdale 25.

La première surface de came hélicoïdale 25 s'étend, dans le premier sens S1, entre des première et deuxième extrémités 25b, 25c séparées l'une de l'autre par un ressaut 25a sensiblement radial, la deuxième extrémité 25c de la première came hélicoïdale 25 étant plus éloignée de la fente 16 que la première extrémité 25b de la première came hélicoïdale 25.

De façon similaire, la deuxième surface de came hélicoïdale 26 s'étend chacune, dans le premier sens S1, entre des première et deuxième extrémités 26b, 26c séparées l'une de l'autre par un ressaut 26a sensiblement radial, la deuxième extrémité 26c de la deuxième came hélicoïdale 26 étant plus éloignée de la fente 16 que la première extrémité 26b de la deuxième came hélicoïdale 26.

Les ressauts 25a, 26a des première et deuxième surfaces de came sont adaptés pour buter l'un contre l'autre en limitant le pivotement du levier dans le deuxième sens S2, lorsque le levier 12 est relevé sensiblement à l'horizontal pour permettre le réglage de la selle 9.

Lorsque le levier 12 est rabattu vers le bas dans la position représentée sur les dessins, la première extrémité 26b de la deuxième surface de came hélicoïdale se trouve dans une position intermédiaire 25d sur la première came 25 (figure 4), en assurant ainsi le serrage du collier de serrage 13.

Par ailleurs, pour limiter les frottements entre les première et deuxième surfaces de came hélicoïdales 25, 26, on interpose entre elles une rondelle de glissement 27 en matériau à faible coefficient de friction, par exemple en laiton. Cette rondelle de glissement 27 est ouverte et présente une forme hélicoïdale en correspondance avec les formes des première et deuxième surfaces de came hélicoïdales 25, 26.

Plus précisément, la rondelle de glissement 27 s'étend angulairement, dans le premier sens S1, entre des première et deuxième extrémités 27b, 27c décalées axialement et séparées par une fente radiale 27a, la deuxième extrémité 27c de la rondelle de glissement étant plus éloignée de la fente 16 que la première extrémité 27b de la rondelle de glissement 27.

La première extrémité 27b de la rondelle de glissement est disposée pour venir en butée contre le ressaut 25a de la première surface de came 25 lorsque le levier 12 pivote dans le deuxième sens S2 et ladite première extrémité 27b de la rondelle de glissement est adaptée pour s'écarter du ressaut 25a de la première surface de came 25 lorsque le levier 12 pivote dans le premier sens S1, ce qui limite encore les frottements au serrage ou au desserrage.

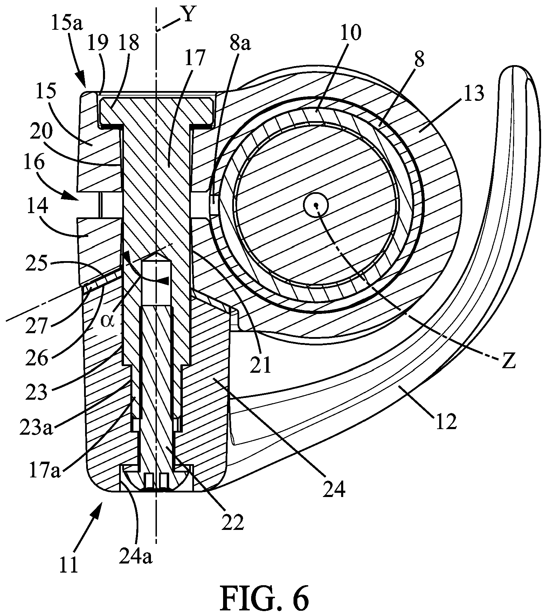

De plus, les première et deuxième surfaces de came hélicoïdales 25, 26 et la rondelle de glissement 27 présentent chacune une forme sensiblement tronconique (voir la figure 6), formant un angle α différent de 90 degrés avec l'axe de rotation Y. L'angle α peut être compris par exemple entre 15 et 45 degrés. Ainsi, la rondelle de glissement 27, bien qu'elle soit ouverte, est efficacement maintenue en position et en forme lors du serrage du collier de serrage 13 par le levier 12.

## Revendications

1. Cycle comportant :
- un cadre (2) monté sur roues (5, 6) et comportant un tube (8) de guidage de selle,
- une selle (9) portée par une tige de selle (10) qui est montée coulissante dans le tube de guidage (8),
- un dispositif (11) de réglage de selle comportant :
- un collier de serrage (13) ouvert disposé autour du tube de guidage (8) et comportant des première et deuxième extrémités (14, 15) aptes à se rapprocher l'une de l'autre en serrant le tube de guidage (8) sur la tige de selle (10), au moins la première extrémité (14) ayant une face externe pourvue d'une première surface de came hélicoïdale (25),
- un levier (12) monté pivotant sur les première et deuxième extrémités du collier de serrage autour d'un axe de rotation (Y) sensiblement perpendiculaire à la tige de selle (10), le levier ayant une deuxième surface de came hélicoïdale (26) disposée en regard de la première surface de came hélicoïdale (25), le levier (12) étant actionnable en pivotement par un utilisateur dans des premier et deuxième sens opposés (S1, S2) pour sélectivement serrer et desserrer le collier de serrage (13),
**caractérisé en ce qu'**il comporte en outre une rondelle de glissement (27) en matériau à faible coefficient de friction, interposée entre les première et deuxième surfaces de came hélicoïdales, la rondelle de glissement (27) étant ouverte et présentant une forme hélicoïdale en correspondance avec les formes des première et deuxième surfaces de came hélicoïdales (25, 26), les première et deuxième surfaces de came hélicoïdales (25, 26) et la rondelle de glissement (27) présentant chacune une forme sensiblement tronconique, formant un angle (α) différent de 90 degrés avec l'axe de rotation (Y).

2. Cycle selon la revendication 1, dans lequel le levier (12) est solidaire d'un tourillon (17) traversant les première et deuxième extrémités (14, 15) du collier de serrage et comportant une tête élargie (18) qui prend appui sur la deuxième extrémité (15) dudit collier de serrage pour serrer le collier de serrage (13) lorsque le levier (12) pivote dans le premier sens.

3. Cycle selon la revendication 1 ou la revendication 2, dans lequel les première et deuxième surfaces de came hélicoïdales (25, 26) s'étendent chacune, dans le premier sens (S1), entre des première et deuxième extrémités (25b, 25c ; 26b, 26c) séparées l'une de l'autre par un ressaut (25a, 26a) sensiblement radial, les ressauts des première et deuxième surfaces de came étant adaptés pour buter l'un contre l'autre en limitant le pivotement du levier dans le deuxième sens.

4. Cycle selon l'une quelconque des revendications précédentes, dans lequel les première et deuxième surfaces de came hélicoïdales (25, 26) s'étendent chacune, dans le premier sens (S1), entre des première et deuxième extrémités (25b, 25c ; 26b, 26c) séparées l'une de l'autre par un ressaut (25a, 26a) sensiblement radial, la rondelle de glissement (27) s'étendant angulairement, dans le premier sens (S1), entre des première et deuxième extrémités (27b, 27c) décalées axialement et séparées par une fente radiale (27a), la première extrémité (27b) de la rondelle de glissement venant en butée contre le ressaut (25a) de la première surface de came (25) lorsque le levier (12) pivote dans le deuxième sens (S2) et la première extrémité (27b) de la rondelle de glissement étant adaptée pour s'écarter du ressaut (25a) de la première surface de came (25) lorsque le levier (12) pivote dans le premier sens (S1).

5. Cycle selon l'une quelconque des revendications précédentes, dans lequel ledit angle (α) est compris entre 15 et 45 degrés.

6. Cycle selon l'une quelconque des revendications précédentes, dans lequel la rondelle de glissement (27) est réalisée au moins partiellement en laiton.

7. Dispositif de réglage comportant :
- un collier de serrage (13) ouvert comportant des première et deuxième extrémités (14, 15) aptes à se rapprocher l'une de l'autre, au moins la première extrémité (14) ayant une face externe pourvue d'une première surface de came hélicoïdale (26),
- un levier (12) monté pivotant sur les extrémités (14, 15) du collier de serrage autour d'un axe de rotation (Y) sensiblement perpendiculaire à un axe central (Z) du collier, le levier (12) ayant une deuxième surface de came hélicoïdale (26) disposée en regard de la première surface de came hélicoïdale (25), le levier (12) étant actionnable en pivotement par un utilisateur dans des premier et deuxième sens opposés (S1, S2) pour sélectivement serrer et desserrer le collier de serrage,
**caractérisé en ce qu'**il comporte en outre une rondelle de glissement (27) en matériau à faible coefficient de friction, interposée entre les première et deuxième surfaces de came hélicoïdales, la rondelle de glissement (27) étant ouverte et présentant une forme hélicoïdale en correspondance avec les formes des première et deuxième surfaces de came hélicoïdales (25, 26), les première et deuxième surfaces de came hélicoïdales (25, 26) et la rondelle de glissement (27) présentant chacune une forme sensiblement tronconique, formant un angle (α) différent de 90 degrés avec l'axe de rotation (Y).

## Patentansprüche

1. Fahrrad aufweisend:
- einen Rahmen (2), der auf Rädern (5, 6) montiert ist und ein Sattelführungsrohr (8) aufweist,
- einen Sattel (9), der von einer Sattelstange (10) getragen wird, die gleitbar in dem Führungsrohr (8) eingesetzt ist,
- eine Verstelleinrichtung (11) zum Verstellen des Sattels, aufweisend:
- einen offenen Spannring (13), der um das Führungsrohr (8) angeordnet ist und ein erstes und ein zweites Ende (14, 15) hat, die sich einander nähern können und dabei das Führungsrohr (8) enger an die Sattelstange (10) spannen, wobei mindestens das erste Ende (14) eine Außenfläche hat, die mit einer ersten helikalen Nockenfläche (25) versehen ist,
- einen Hebel (12), der an dem ersten und zweiten Ende des Spannrings drehbar um eine Drehachse (Y), die im Wesentlichen senkrecht zur Sattelstange (10) ist, angeordnet ist, wobei der Hebel eine zweite helikale Nockenfläche (26) hat, die gegenüber der ersten helikalen Nockenfläche (25) angeordnet ist, wobei der Hebel (12) von einem Benutzer in eine erste und eine dazu entgegengesetzte zweite Richtung (S1, S2) in Drehung versetzt werden kann, um den Spannring (13) selektiv enger zu spannen und zu lockern,
**dadurch gekennzeichnet, dass** sie ferner eine zwischen der ersten und zweiten helikalen Nockenfläche angeordnete Gleitscheibe (27) aus einem Material mit kleinem Reibungskoeffizienten aufweist, wobei die Gleitscheibe (27) offen ist und eine den Formen der ersten und zweiten helikalen Nockenflächen (25, 26) entsprechende helikale Form hat, wobei die erste und zweite helikale Nockenfläche (25, 26) und die Gleitscheibe (27) jeweils eine im Wesentlichen kegelstumpfartige Form aufweisen, die mit der Drehachse (Y) einen Winkel (α) von ungleich 90 Grad bildet.

2. Fahrrad nach Anspruch 1, in welchem der Hebel (12) fest verbunden mit einem Zapfen (17) ist, der sich durch das erste und zweite Ende (14, 15) des Spannrings (15) erstreckt und einen vergrößerten Kopf (18) aufweist, der an dem zweiten Ende (15) des Spannrings zur Anlage kommt, um den Spannring (13) enger zu spannen, wenn der Hebel (12) in die erste Richtung gedreht wird.

3. Fahrrad nach Anspruch 1 oder Anspruch 2, in welchem die erste und zweite helikale Nockenfläche (25, 26) sich jeweils in die erste Richtung (S1) zwischen einem ersten und zweiten Ende (25b, 25c; 26b, 26c) erstrecken, die voneinander durch einen im Wesentlichen radialen Vorsprung (25a, 26a) getrennt sind, wobei die Vorsprünge der ersten und zweiten Nockenfläche angepasst sind, um aneinander zu stoßen und dadurch die Drehung des Hebels in die zweite Richtung zu begrenzen.

4. Fahrrad nach einem der vorstehenden Ansprüche, in welchem die erste und zweite helikale Nockenfläche (25, 26) sich jeweils in die erste Richtung (S1) zwischen einem ersten und zweiten Ende (25b, 25c; 26b, 26c) erstrecken, die voneinander durch einen im Wesentlichen radialen Vorsprung (25a, 26a) getrennt sind, wobei die Gleitscheibe (27) sich angulär in die erste Richtung (S1) zwischen einem ersten und zweiten Ende (27b, 27c) erstreckt, die axial versetzt sind und durch einen radialen Schlitz (27a) voneinander getrennt sind, wobei das erste Ende (27b) der Gleitscheibe an dem Vorsprung (25a) der ersten Nockenfläche (25) zum Anschlag kommt, wenn der Hebel (12) in die zweite Richtung (S2) gedreht wird, und das erste Ende (27b) der Gleitscheibe angepasst ist, um sich von dem Vorsprung (25a) der ersten Nockenfläche (25) zu entfernen, wenn der Hebel (12) in die erste Richtung (S1) gedreht wird.

5. Fahrrad nach einem der vorstehenden Ansprüche, in welchem der Winkel (α) zwischen 15 und 45 Grad beträgt.

6. Fahrrad nach einem der vorstehenden Ansprüche, in welchem die Gleitscheibe (27) zumindest teilweise aus Messing hergestellt ist.

7. Verstelleinrichtung, aufweisend:
- einen offenen Spannring (13), der ein erstes und ein zweites Ende (14, 15) hat, die sich nähern können, wobei mindestens das erste Ende (14) eine Außenfläche hat, die mit einer ersten helikalen Nockenfläche (25) versehen ist,
- einen Hebel (12), der an Enden (14, 15) des Spannrings drehbar um eine Drehachse (Y), die im Wesentlichen senkrecht zu einer zentralen Achse (Z) des Rings ist, angebracht ist, wobei der Hebel (12) eine zweite helikale Nockenfläche (26) hat, die gegenüber der ersten helikalen Nockenfläche (25) angeordnet ist, wobei der Hebel (12) von einem Benutzer in eine erste und eine dazu entgegengesetzte zweite Richtung (S1, S2) in Drehung versetzt werden kann, um den Spannring selektiv enger zu spannen und zu lockern,
**dadurch gekennzeichnet, dass** sie eine zwischen der ersten und zweiten helikalen Nockenfläche angeordnete Gleitscheibe (27) aus einem Material mit kleinem Reibungskoeffizienten aufweist, wobei die Gleitscheibe (27) offen ist und eine den Formen der ersten und zweiten helikalen Nockenflächen (25, 26) entsprechende helikale Form hat, wobei die erste und zweite helikale Nockenfläche (25, 26) und die Gleitscheibe (27) jeweils eine im Wesentlichen kegelstumpfartige Form aufweisen, die mit der Drehachse (Y) einen Winkel (α) von ungleich 90 Grad bildet.

## Claims

1. Cycle comprising:
- a frame (2) mounted on wheels (5, 6) and comprising a saddle-guiding tube (8),
- a saddle (9) supported by a seat post (10) that is mounted such that it slides in the guiding tube (8),
- a saddle-adjusting mechanism (11) comprising:
-- an open clamping collar (13) arranged about the guiding tube (8) and comprising first and second ends (14, 15) capable of being moved closer to one another while clamping the guiding tube (8) on the seat post (10), whereby at least the first end (14) has an outer face provided with a first helical cam surface (25),
-- a lever (12) mounted such that it pivots on the first and second ends of the clamping collar about a rotational axis (Y) that is substantially perpendicular to the seat post (10), the lever having a second helical cam surface (26) arranged facing the first helical cam surface (25), the lever (12) being capable of being actuated by pivoting by a user in first and second opposite directions (S1, S2) to selectively clamp and unclamp the clamping collar (13),
**characterised in that** it further comprises a sliding washer (27) made of a material with a low coefficient of friction, inserted between the first and second helical cam surfaces, the sliding washer (27) being open and having a helical shape corresponding to the shapes of the first and second helical cam surfaces (25, 26), whereby the first and second helical cam surfaces (25, 26) and the sliding washer (27) each have a substantially frustoconical shape, forming an angle (α) that deviates from the rotational axis (Y) by 90 degrees.

2. Cycle according to claim 1, wherein the lever (12) is secured to a trunnion (17) passing through the first and second ends (14, 15) of the clamping collar and comprising an enlarged head (18) that bears against the second end (15) of said clamping collar in order to clamp the clamping collar (13) when the lever (12) pivots in the first direction.

3. Cycle according to either claim 1 or claim 2, wherein the first and second helical cam surfaces (25, 26) each extend, in the first direction (S1), between first and second ends (25b, 25c; 26b, 26c) separated from one another by a substantially radial protrusion (25a, 26a), the protrusions of the first and second cam surfaces being suitable for abutting against one another while limiting the pivoting of the lever in the second direction.

4. Cycle according to any of the previous claims, wherein the first and second helical cam surfaces (25, 26) each extend, in the first direction (S1), between first and second ends (25b, 25c; 26b, 26c) separated from one another by a substantially radial protrusion (25a, 26a), the sliding washer (27) extending angularly, in the first direction (S1), between first and second ends (27b, 27c) that are axially offset and separated by a radial slot (27a), whereby the first end (27b) of the sliding washer abuts against the protrusion (25a) of the first cam surface (25) when the lever (12) pivots in the second direction (S2) and whereby the first end (27b) of the sliding washer is suitable for moving away from the protrusion (25a) of the first cam surface (25) when the lever (12) pivots in the first direction (S1).

5. Cycle according to any of the previous claims, wherein said angle (α) lies in the range 15 to 45 degrees.

6. Cycle according to any of the previous claims, wherein the sliding washer (27) is at least partially made of brass.

7. Adjusting mechanism comprising:
- an open clamping collar (13) comprising first and second ends (14, 15) capable of being moved closer to one another, whereby at least the first end (14) has an outer face provided with a first helical cam surface (26),
- a lever (12) mounted such that it pivots on the ends (14, 15) of the clamping collar about a rotational axis (Y) that is substantially perpendicular to a central axis (Z) of the collar, the lever (12) having a second helical cam surface (26) arranged facing the first helical cam surface (25), the lever (12) being capable of being actuated by pivoting by a user in first and second opposite directions (S1, S2) to selectively clamp and unclamp the clamping collar,
**characterised in that** it further comprises a sliding washer (27) made of a material with a low coefficient of friction, inserted between the first and second helical cam surfaces, the sliding washer (27) being open and having a helical shape corresponding to the shapes of the first and second helical cam surfaces (25, 26), whereby the first and second helical cam surfaces (25, 26) and the sliding washer (27) each have a substantially frustoconical shape, forming an angle (α) that deviates from the rotational axis (Y) by 90 degrees.
